# EUROPÄISCHE PATENTSCHRIFT

(11) **EP 1 261 508 B1**
(45) Veröffentlichungstag und Bekanntmachung des Hinweises auf die Patenterteilung: **20.04.2005**
(21) Anmeldenummer: 01907555.5
(22) Anmeldetag: 23.02.2001
(51) Int. Cl.: B60R 11/02

(54) **VORRICHTUNG ZUR AUFNAHME EINES FLACHBILDSCHIRMES IN DER MITTELKONSOLE EINES KRAFTFAHRZEUGS**
DEVICE FOR ACCOMMODATING A FLAT SCREEN MONITOR IN THE CENTER CONSOLE OF AN AUTOMOBILE
DISPOSITIF SERVANT A LOGER UN ECRAN PLAT DANS LA CONSOLE CENTRALE D'UN VEHICULE AUTOMOBILE

(30) Priorität: 07.03.2000 DE 10010991
(43) Veröffentlichungstag der Anmeldung: 04.12.2002
(73) Patentinhaber: DaimlerChrysler AG, 70567 Stuttgart (DE)
(72) Erfinder: FISCHER, Thomas, 75394 Oberkollbach (DE)
(86) Internationale Anmeldenummer: PCT/EP2001/002058
(87) Internationale Veröffentlichungsnummer: WO 2001/066384

(56) Entgegenhaltungen:
- EP-A- 0 338 405
- PATENT ABSTRACTS OF JAPAN vol. 1997, no. 05, 30. Mai 1997 (1997-05-30) & JP 09 002168 A (NILES PARTS CO LTD), 7. Januar 1997 (1997-01-07)
- PATENT ABSTRACTS OF JAPAN vol. 1998, no. 11, 30. September 1998 (1998-09-30) & JP 10 166957 A (CALSONIC CORP), 23. Juni 1998 (1998-06-23)
- PATENT ABSTRACTS OF JAPAN vol. 016, no. 471 (M-1318), 30. September 1992 (1992-09-30) & JP 04 169349 A (SUZUKI MOTOR CORP), 17. Juni 1992 (1992-06-17)
- PATENT ABSTRACTS OF JAPAN vol. 018, no. 453 (M-1662), 24. August 1994 (1994-08-24) & JP 06 144084 A (MAZDA MOTOR CORP), 24. Mai 1994 (1994-05-24)

## Beschreibung

In heutigen Kraftfahrzeugen werden bekannterweise Komponenten mit einem LCD (Flüssigkristall-Display) zur grafischen Navigationsunterstützung des Fahrers eingesetzt. Außerdem sind die Kraftfahrzeuge mit verschiedenen weiteren Komponenten zur Information und Unterhaltung ausgerüstet; wie z.B. mit Laufwerken für abspielbare DVD-, CD-, Mini-Disk- und CC-Informationsträger, deren Bedienung ebenfalls durch den Flachbildschirm unterstützt wird.

Aus ergonomischen Gründen müssen diese Komponenten in Reichweite des Fahrers angeordnet sein und es ist bekannt, die Laufwerke für die vorgenannten Informationsträger hinter dem LCD anzuordnen. Das LCD ist in einer Blende mit den Bedienungselementen für die Komponenten aufgenommen und ist zur Bestückung der Laufwerke mit den Informationsträgern verschiebbar.

In einer bekannten Vorrichtungen dieser Art (siehe die gattungsbildende EP 0338405 B1), benötigt die Blende mit dem LCD zum Freigeben der Laufwerke einen ausreichenden Freiraum im angrenzenden Fahrgastraum für das 90°-Umklappen der Blende. Dadurch kann es zu Interessenkonflikten bei der Anordnung des Ganghebels oder anderen Komponenten des Dom-Bereiches kommen; z.B. mit einer Halterung für einen Getränkebecher, mit Schaltern oder Bedienelementen für Klimageräte.

Aufgabe der Erfindung ist es, eine Vorrichtung zur Aufnahme eines Flachbildschirmes im Dom bzw. der Mittelkonsole eines Kraftfahrzeuges zu schaffen, die eine platzsparende Freigabe von hinter dem Flachbildschirm angeordneten Komponenten ermöglicht.

Diese Aufgabe wird erfindungsgemäß durch die Merkmale des Patentanspruchs 1 erfüllt. Weiterbildungen der Erfindung sind in den Unteransprüchen angegeben.

Die erfindungsgemäße Lösung verwendet eine feststehende Blende. Zur Laufwerks-Freigabe wird nur der hinter der Blende angeordnete Flachbildschirm motorisch angetrieben bewegt. Dabei ist die Bewegung so geführt, dass der Flachbildschirm nicht in den angrenzenden Fahrgastraum hineinragt, wodurch keine anderen, benachbarten Komponenten mit dem Flachbildschirm kollidieren können.

Die feststehende Blende hat den Vorteil, dass nicht alle Anschlusskabel, der auf der Blende angeordneten Bedienelemente, bei den Laufwerks-Freigaben bewegt werden müssen. Sie ermöglicht außerdem ein besseres Design, indem die für die Verschiebung erforderlichen mechanischen Antriebselemente hinter der Blende versteckbar sind. Außerdem ergeben sich durch dieses Prinzip in dem begrenzt zur Verfügung stehenden Raum einfache und stabile Lösungen für die Halterung des verschiebbaren Flachbildschirmes. Bei einer Anwendung der erfindungsgemäßen Lösung können keine Becher oder sonstige Gegenstände auf einem herausgeklappten Flachbildschirm abgestellt werden und von diesem herunterfallen.

Anhand der Zeichnung wird nachstehend ein Ausführungsbeispiel der Erfindung näher erläutert.
- Fig.1: zeigt eine erfindungsgemäße Vorrichtung in geschnittener Seitenansicht,
- Fig.2: zeigt die Vorrichtung in Vorderansicht,
- Fig.3: zeigt die Vorrichtung perspektivisch mit den Führungsmitteln für die Flachbildschirm-Verschiebung und einer Flachbildschirm-Position welche die Bestückungsöffnung des oberen Laufwerks freigibt und
- Fig.4: zeigt die Vorrichtung mit einer Flachbildschirm-Position, welche die Bestückungsöffnung des unteren Laufwerks freigibt.

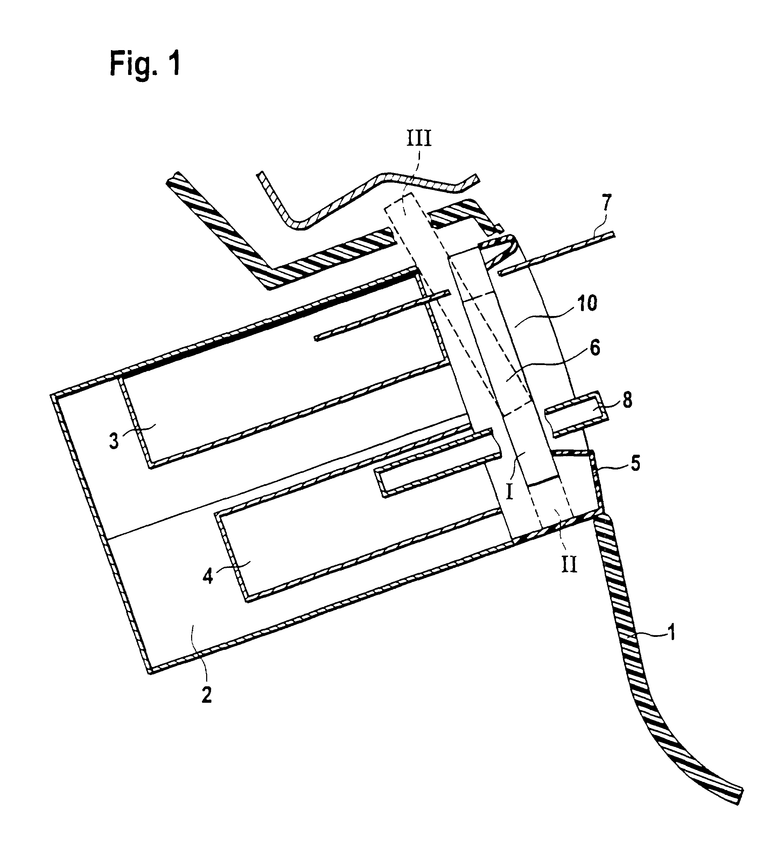

Das in Fig.1 gezeigte Ausführungsbeispiel für die erfindungsgemäße Vorrichtung ist in den Dom bzw. die Mittelkonsole 1 eines Kraftfahrzeuges eingesetzt und weist ein Gerätegehäuse 2, ein Laufwerk 3, ein Laufwerk 4, eine Blende 5 und einen Flachbildschirm 6 auf.

Die Laufwerke 3 und 4 sind in dem Gerätegehäuse 2 übereinander angeordnet und in der zum Fahrgastraum hin freien Öffnung des Gerätegehäuses 2 ist der Flachbildschirm 6 in der Blende 5 des Gerätegehäuses vertikal verschiebbar angeordnet. Alternativ dazu könnte bei geeigneten Platzverhältnissen auch eine horizontale Verschiebung des flachbildschirems stattfinden. Als Flachbildschirm 6 ist im Ausführungsbeispiel z.B ein LCD (Liquid Crystal Display) verwendet; es können alternativ dazu aber auch andere Flachbildschirme Verwendung finden. Der verschiebbare Flachbildschirm 6 ist von der feststehenden Blende 5 zum Fahrgastraum hin abgedeckt und durch ein in der Blende 5 ausgebildetes Fenster 10 ablesbar.

Der Flachbildschirm 6 ist motorisch angetrieben in drei verschiedene Positionen verschiebbar. Alternativ zu der motorischen Verschiebung ist auch eine manuelle Verschiebung möglich. In Fig.1 ist der Flachbildschirm 6 in der Normalposition - "I" -, in der die beiden Laufwerke 3 und 4 zum Fahrgastraum hin von dem Flachbildschirm 6 abgedeckt sind, mit ausgezogener Umrandung gezeigt. Für die alternativ einnehmbaren Laufwerks-Bestückungspositionen - "II" und "III" - ist der Flachbildschirm 6 mit gestrichelter Umrandung gezeigt.

In Position "II" ist das obere Laufwerk 3 zur Bestückung mit einem Informationsträger 7 freigegeben und in Position "III" das untere Laufwerk 4 für die Bestückung mit einem Informationsträger 8. Die Position "II" wird aus der Normalposition "I" durch eine vertikale Verschiebung des Flachbildschirmes 6 nach unten erreicht. Die Verschiebung des Flachbildschirmes 6 in die Position "III" wird aus der Normalposition "I" durch eine vertikale Verschiebung nach oben bei einem gleichzeitigem Kippen des Flachbildschirmes 6 in das Gerätegehäuse 2 hinein bewirkt. Der Flachbildschirm 6 wird dabei nur schräg nach hinten weggekippt; der Kippwinkel ist kleiner als 90°. Das im Ausführungsbeispiel erfolgende Kippen des Flachbildschirmes ist nur notwendig, wenn im Dom enge Platzverhältnisse herrschen. Auch kann das erfidnungsgemäße Verschieben des Flachbildschirmes 6 mit einem vorangehenden Abrücken des Flachbildschirmes von der Rückwand der Blende 5 gekoppelt sein.

Im gezeigten Ausführungsbeispiel handelt es sich bei dem Laufwerk 3 um ein DVD-laufwerk und bei dem Laufwerk 4 um ein CC-Laufwerk. Anstelle der vorangehend genannten Laufwerke können auch beliebig andere Komponenten, auf denen die Fahrinsasssen bei Bedarf Zugriff haben möchten, hinter dem Flachbildschirm angeordnet sein.

Abweichend von dem vorangehend beschriebenen Ausführungsbeispiel ist die erfindungsgemäße Lösung nicht auf die Abdeckung eines DVD- und CC-Laufwerkes und auf die hier gezeigte Reihenfolge- DVD-Laufwerk über CC-Laufwerk - beschränkt. Es können beliebige andere Laufwerke zum Abspielen von Informationsträgern übereinander in beliebiger Reihenfolge angeordnet sein und die Anzahl der übereinander angeordneten Laufwerke ist nicht auf zwei Laufwerke beschränkt. Auch können anstelle von Laufwerken andere Komponenten von dem Flachbildschirm 6 abgedeckt sein, die zum Bedienen einen zeitlich begrenzten, freien Zugang vom Fahrgastraum her benötigen.

Bei entsprechenden Platzverhältnissen könnte die Freigabe eines unteren Laufwerkes auch nur durch ein vertikales Verschieben des Flachbildschirems 6 nach oben, ohne ein rückwärtiges Wegkippen,angefahren werden oder es könnte ein oberes Laufwerk durch ein vertikales Verschieben des Flachbildschirmes 6 nach unten bei gleichzeitigem rückwärtigen Wegklappen erfolgen. Wesentlich für die erfindungsgemäße Lösung ist ein vertikales oder horizontales Verschieben und gegebenenfalls Wegkippen des Flachbildschirmes 6, ohne dass der Flachbildschirm dabei in den Fahrgastraum hineinragt.

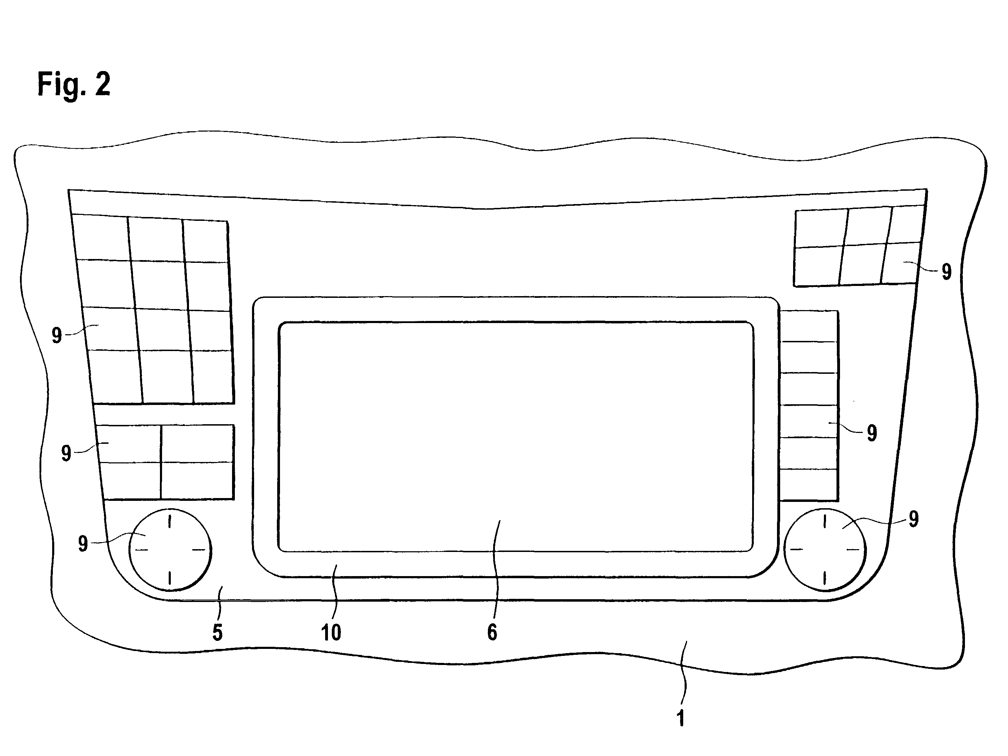

Die in Fig.2 gezeigte Vorderansicht der Vorrichtung zeigt die in dem Dom 1 befestigte Blende 5 mit dem Fenster 10 und Bedienelementen 9 für Laufwerke, Navigationssysteme und andere Komponenten zur Information oder Unterhaltung. Durch das Fenster 10 hindurch ist der Flachbildschirm 6 von den Fahrinsassen ablesbar oder bei aus der Normalposition verschobenem Flachbildschirm sind durch das Fenster 10 hindurch die dahinterliegende Laufwerke 3,4 manuell mit Informationsträgern 7,8 bestückbar oder es sind so andere Komponenten, die nicht von der Blende aus bedient werden, manuell bedienbar.

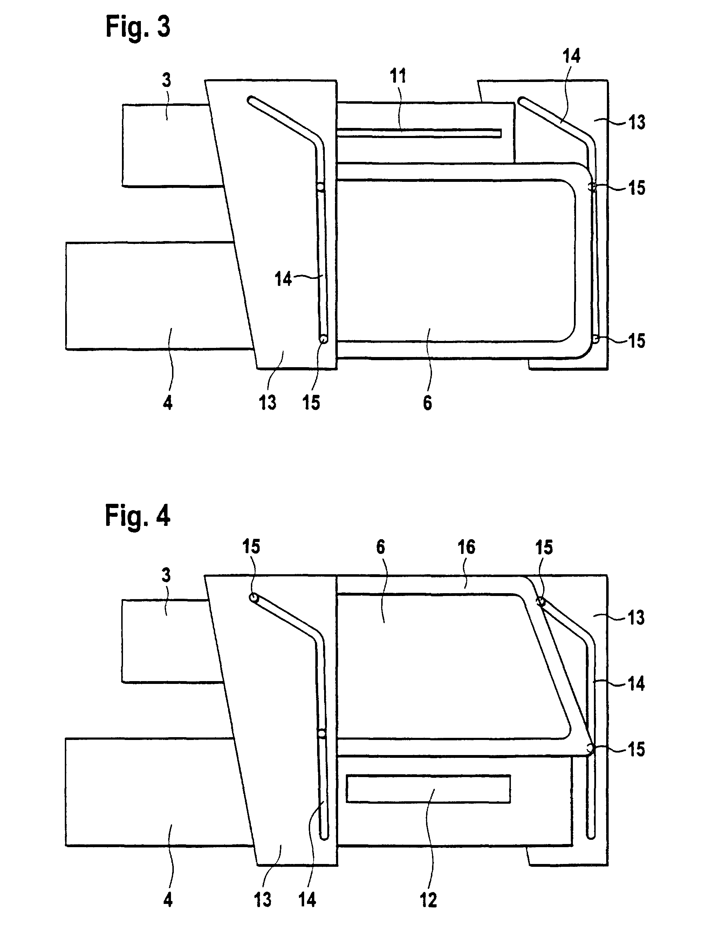

In der in Fig.3 perspektivisch gezeigte Vorrichtung sind die Führungsmittel für die Flachbildschirm-Verschiebung erkennbar. Der Flachbildschirm 6 ist auf beiden Seiten mittels Führungsstiften 15 in Führungsschlitzen 14 geführt, die in den Seitenwänden 13 des Gerätegehäuses 2 ausgebildet sind. Der Antrieb für die Verschiebung des Flachbildschirmes 6 erfolgt - in Fig.3 nicht dargestellt - motorisch über ein mechanisches Getriebe und kann von einem geeignet ausgebildeten Bedienelement 9 auf der Blende 5 - wie z.B. von einem Wippschalter - elektrisch gesteuert sein. In Fig.3 ist der Flachbildschirm 6 in seine Position "II" verschoben, in der die Bestückungsöffnung 11 des oberen Laufwerkes 3 frei zugänglich für den zugehörigen Informationsträger 7 ist.

Fig.4 zeigt die Vorrichtung mit der frei zugänglichen Bestückungsöffnung 12 des unteren Laufwerkes 4 . Der Flachbildschirm 6 ist dazu vertikal nach oben und nach hinten gekippt in seine Position "III" verschoben. Die Verschiebebewegungen des Flachbildschirmes 6 sind durch die Form der Führungsschlitze 14 und durch die Anordnung der Führungsstifte 15 an dem Flachbildschirm vorgegeben.

## Patentansprüche

1. Vorrichtung zur Aufnahme eines Flachbildschirmes (6), insbesondere eines LCDs (Flüssigkristall-Displays), in der Mittelkonsole (1) eines Kraftfahrzeuges mit Komponenten (3, 4) zum Abspielen von Informationsträgern zur Unterhaltung der Fahrzeuginsassen, mit einer zum Fahrgastraum hin vor diesen Komponenten angeordneten Blende (5) mit Bedienelementen und dem in die Blende integrierten Flachbildschirm (6),
**dadurch gekennzeichnet ,**
**dass** die Blende feststehend ist, dass der Flachbildschirm (6) hinter der Blende (5) angeordnet, zum Fahrgastraum von der Blende (5) abgedeckt und durch ein in der Blende ausgebildetes Fenster (10) ablesbar ist,
und **dass** der Flachbildschirm (6) zur Erreichung einer freien Zugänglichkeit zu den Komponenten (3, 4) so in der Vorrichtung bewegbar ist, dass er während der Bewegung nicht aus dem Fenster (10) der Blende (5) heraus in den Fahrgastraum hineinragt.

2. Vorrichtung nach Patentanspruch 1, **dadurch gekennzeichnet, dass** die Blende (5) unbeweglich in der Mittelkonsole (1) befestigt ist und dass nur der Flachbildschirm (6) zur Erreichung der freien Zugänglichkeit zu den vom Flachbildschirm(6) abgedeckten Komponenten bewegt wird.

3. Vorrichtung nach Patentanspruch 1 oder 2, **dadurch gekennzeichnet, dass** der Flachbildschirm(6) Informationen eines Navigationssystemes anzeigt und dass es sich bei den vom Flachbildschirm(6) abgedeckten Komponenten um zwei Laufwerke (3,4) mit Bestückungsöffnungen (11,12) zum Abspielen von Informationsträgern (7,8) handelt.

4. Vorrichtung nach einem der vorangehenden Patentansprüche 1 bis 3, **dadurch gekennzeichnet, dass** die Bewegung des Flachbildschirmes(6) motorisch über mechanische Antriebselemente erfolgt, die vom Fahrgastraum aus unsichtbar hinter der Blende (5) angeordnet sind.

## Claims

1. Device for accommodating a flat screen monitor (6), in particular an LCD (liquid crystal display), in the centre console of a motor vehicle with components (3, 4) for playing back information carriers to entertain the occupants of the vehicle, comprising a panel (5) arranged in front of these components toward the passenger compartment, with operating elements and the flat screen monitor (6) integrated into the panel, **characterised in that** the panel is fixed, **in that** the flat screen monitor (6) is arranged behind the panel (5), covered by the panel (5) with respect to the passenger compartment and can be read through a window (10) formed in the panel, and **in that** to achieve free access to the components (3, 4), the flat screen monitor (6) can be moved in the device in such a way that, during the movement, it does not project from the window (10) of the panel (5) into the passenger compartment.

2. Device according to claim 1, **characterised in that** the panel (5) is non-movably fastened in the centre console (1) and that only the flat screen monitor (6) is moved to achieve free access to the components covered by the flat screen monitor (6).

3. Device according to claim 1 or 2, **characterised in that** the flat screen monitor (6) displays information from a navigation system and **in that** the components covered by the flat screen monitor (6) are two disc drives (3, 4) with loading apertures (11, 12) for playing back information carriers (7, 8).

4. Device according to any one of the preceding claims 1 to 3, **characterised in that** the movement of the flat screen monitor (6) takes place in a motorised manner via mechanical drive elements which, from the passenger compartment, are arranged invisibly behind the panel (5).

## Revendications

1. Dispositif servant à loger un écran plat (6), en particulier un LCD (affichage à cristaux liquides), dans la console centrale (1) d'un véhicule automobile, avec des composants (3, 4) servant à exploiter des supports d'information pour divertir les passagers du véhicule, avec un masque (5) disposé, par rapport à l'habitacle, devant ces composants, et comprenant des éléments de manoeuvre, et l'écran plat (6) intégré dans le masque,
**caractérisé en ce que**
le masque est stationnaire, **en ce que** l'écran plat (6) est disposé derrière le masque (5), est couvert par le masque (5) vis-à-vis de l'habitacle et peut être lu à travers une fenêtre (10) ménagée dans le masque,
et **en ce que** l'écran plat (6), pour obtenir une libre accessibilité aux composants (3, 4), est déplaçable dans le dispositif, de manière que, pendant le déplacement, il ne ressorte pas de la fenêtre (10) du masque (5) en pénétrant dans l'habitacle.

2. Dispositif selon la revendication 1, **caractérisé en ce que** le masque (5) est fixé de façon stationnaire dans la console centrale (1) et que seul l'écran plat (6) est déplacé pour obtenir la libre accessibilité aux composants couverts par l'écran plat (6).

3. Dispositif selon la revendication 1 ou 2, **caractérisé en ce que** l'écran plat (6) affiche des informations d'un système de navigation, et **en ce que**, concernant les composants couverts par l'écran plat (6), il s'agit de deux lecteurs (3, 4) munis d'ouvertures de chargement (11, 12), pour exploiter des supports d'information (7, 8).

4. Dispositif selon l'une des revendications 1 à 3 précédentes, **caractérisé en ce que** le déplacement de l'écran plat (6) se fait de façon motorisée par l'intermédiaire d'éléments de manoeuvre mécaniques, disposés derrière l'écran (5), de façon invisible depuis l'habitacle.
